# EUROPÄISCHE PATENTANMELDUNG

(11) **EP 1 705 505 A1**
(43) Veröffentlichungstag der Anmeldung: **27.09.2006**
(21) Anmeldenummer: 06004558.0
(22) Anmeldetag: 07.03.2006
(51) Int. Cl.: G02B 6/44

(54) **Vorrichtung zur strukturierten Ablage bzw. Handhabung von in Mikrokabeln geführten Lichtwellenleitern**

(30) Priorität: 23.03.2005 DE 102005014069
(71) Anmelder: CCS Technology, Inc., Wilmington, DE 19803 (US)
(72) Erfinder: Syplacz, Roman, Arnold, Theodor, 58099 Hagen (DE); Meyer, Thomas, 12557 Berlin (DE); Nath, Torsten, 10243 Berlin (DE)
(74) Vertreter: Sturm, Christoph

(57) **Zusammenfassung**

Die Erfindung betrifft eine Vorrichtung, insbesondere Kabelmuffe (10), zur strukturierten Ablage bzw. Handhabung von in Mikrokabeln bzw. Minikabeln geführten Lichtwellenleitern, mit einem einen Kabeleinführungsbereich aufweisenden Gehäuse, wobei der Kabeleinführungsbereich mehrere Kabeleinführungen aufweist. Erfindungsgemäß sind die Kabeleinführungen fabrikseitig mit Röhrchen (13), insbesondere mit Mikroducts bzw. Miniducts, zur Einführung von Mikrokabeln vorbestückt bzw. vorkonfektioniert, derart, dass bei Installationsarbeiten im Feld Mikrokabel über die Röhrchen in die Vorrichtung einführbar sind.

## Beschreibung

Die Erfindung betrifft eine Vorrichtung zur strukturierten Ablage bzw. Handhabung von in Mikrokabeln bzw. in Minikabeln geführten Lichtwellenleitern gemäß dem Oberbegriff des Patentanspruchs 1.

Vorrichtungen zur strukturierten Ablage bzw. Handhabung von Lichtwellenleitern, wie zum Beispiel Kabelmuffen, werden in Lichtwellenleiterkabelnetzen zum Schutz von Spleißverbindungen an Verbindungsstellen von zwei Lichtwellenleiterkabeln sowie zum Schutz der Lichtwellenleiter an Abzweigstellen oder Aufteilungsstellen von Lichtwellenleiterkabeln verwendet. Dabei müssen die Vorrichtungen, insbesondere die Kabelmuffen, die Kontinuität der Lichtwellenleiterkabel so gewährleisten, als wären die Lichtwellenleiterkabel nicht unterbrochen.

Beim Aufbau von Verbindungsstellen und Abzweigstellen in Lichtwellenleiterkabelnetzen ist unter Verwendung der aus dem Stand der Technik bekannten Kabelmuffen im Feld ein erheblicher Installationsaufwand erforderlich. Dies gilt insbesondere dann, wenn derartige Verbindungsstellen oder Abzweigstellen in Lichtwellenleiterkabelnetzen hergestellt werden sollen, die aus in Verlegeröhrchen - in sogenannten Mikroducts bzw. Miniducts - geführten Mikrokabeln bzw. Minikabeln aufgebaut sind. Derartige Mikrokabel bzw. Minikabel verfügen über einen Außendurchmesser bis maximal in etwa 7 mm und werden üblicherweise in die Verlegeröhrchen, in die sogenannten Mikroducts bzw. Miniducts, eingeblasen.

Beim Aufbau von Verbindungsstellen und Abzweigstellen ist es in diesem Fall erforderlich, die Kabelmuffe, insbesondere einen Dichtungskörper derselben, im Feld zu zerlegen und die Mikrokabel bzw. Minikabel im Bereich sogenannter Kabeleinführungen des Dichtungskörpers in die Kabelmuffe einzuführen. Dies erfordert einen hohen Zeitaufwand und verursacht daher hohe Kosten beim Aufbau der Verbindungsstellen bzw. Abzweigstellen.

Hiervon ausgehend liegt der vorliegenden Erfindung das Problem zu Grunde, eine neuartige Vorrichtung zur strukturierten Ablage bzw. Handhabung von in Mikrokabeln bzw. in Minikabeln geführten Lichtwellenleitern zu schaffen.

Dieses Problem wird dadurch gelöst, dass die Eingangs genannte Vorrichtung durch die Merkmale des kennzeichnenden Teils des Patentanspruchs 1 weitergebildet ist. Erfindungsgemäß sind die Kabeleinführungen fabrikseitig mit Röhrchen, insbesondere mit Mikroducts bzw. Miniducts, zur Einführung von Mikrokabeln bzw. Minikabeln vorbestückt bzw. vorkonfektioniert, derart, dass bei Installationsarbeiten im Feld Mikrokabel bzw. Minikabel über die Röhrchen in die Vorrichtung einführbar sind.

Im Sinne der hier vorliegenden Erfindung wird eine Vorrichtung zur strukturierten Ablage bzw. Handhabung von in Mikrokabeln bzw. Minikabeln geführten Lichtwellenleitern vorgeschlagen, die im Bereich ihrer Kabeleinführungen fabrikseitig mit Röhrchen vorkonfektioniert ist, um bei Installationsarbeiten im Feld Mikrokabel bzw. Minikabel über die Röhrchen in die Vorrichtung einzuführen. Hierdurch verringert sich der Installationsaufwand im Feld beträchtlich, da der Dichtungskörper einer Kabelmuffe im Feld nicht mehr zerlegt werden muss. Die Mikrokabel bzw. Minikabel müssen lediglich über die vorkonfektionierten Röhrchen, die sich durch den Dichtungskörper erstrecken, in die erfindungsgemäße Vorrichtung eingeführt werden.

Ein Verfahren zum Aufbau einer Verbindungsstelle und/oder einer Abzweigstelle eines Lichtwellenleiterkabelnetzes im Bereich von in Verlegeröhrchen geführten Mikrokabeln bzw. Minikabeln unter Verwendung der erfindungsgemäßen Vorrichtung ist in Patentanspruch 9 definiert.

Bevorzugte Weiterbildungen der Erfindung ergeben sich aus den Unteransprüchen und der nachfolgenden Beschreibung.

Ein Ausführungsbeispiel der Erfindung wird, ohne hierauf beschränkt zu sein, anhand der Zeichnung näher erläutert. In der Zeichnung zeigt:
- Fig. 1:: eine stark schematisierte Darstellung einer als Haubenmuffe ausgebildeten, erfindungsgemäßen Vorrichtung zur strukturierten Ablage bzw. Handhabung von in Mikrokabeln bzw. Minikabeln geführten Lichtwellenleitern,
- Fig. 2:: einen Dichtungskörper der Vorrichtung der Fig. 1,
- Fig. 3 bis 7:: eine mögliche Vorgehensweise bei Installationsarbeiten im Feld zum Aufbau eines Lichtwellenleiterkabelnetzwerks unter Verwendung der Vorrichtung der Fig. 1.

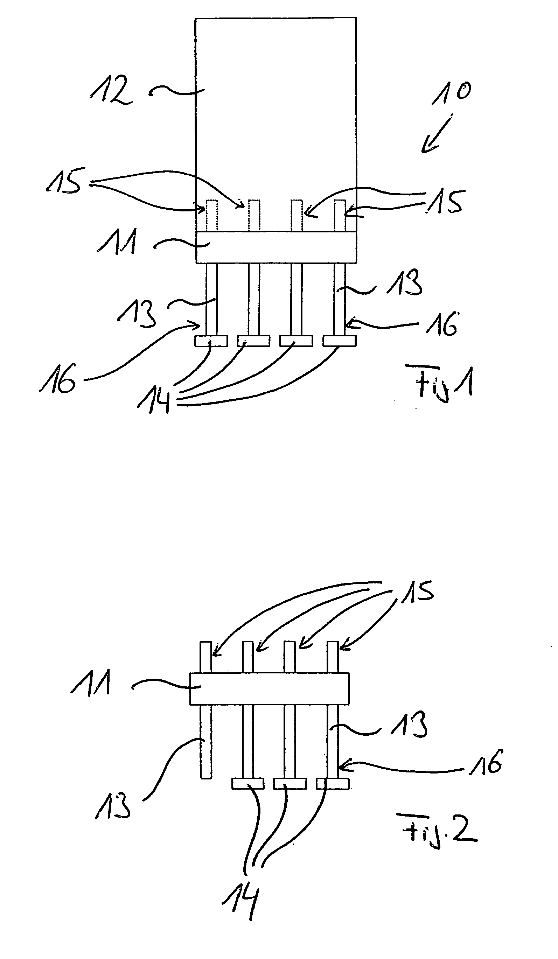

Nachfolgend wird die hier vorliegende Erfindung unter Bezugnahme auf Fig. 1 bis 7 in größerem Detail beschrieben.

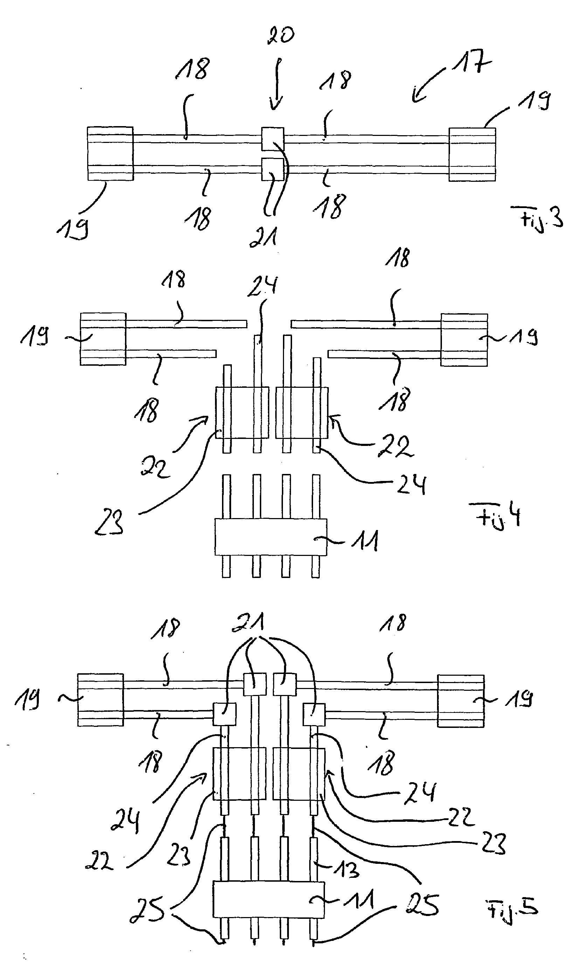

Fig. 1 und 2 zeigen eine als Kabelmuffe 10 ausgebildete, erfindungsgemäße Vorrichtung zur strukturierten Ablage bzw. Handhabung von in Mikrokabeln bzw. in Minikabeln geführten Lichtwellenleitern. Die Kabelmuffe der Fig. 1 und 2 ist als Haubenmuffe ausgeführt und verfügt über ein Gehäuse, welches einen Innenraum der Kabelmuffe 10 definiert. Das Gehäuse wird im gezeigten Ausführungsbeispiel von einem Dichtungskörper 11 und einem Haubenkörper 12 gebildet.

Der Dichtungskörper 11 bildet einen sogenannten Kabeleinführungsbereich des von dem Dichtungskörper 11 sowie dem Haubenkörper 12 gebildeten Gehäuses der Kabelmuffe 10. Der Dichtungskörper 11 verfügt über mehrere Kabeleinführungen, um Lichtwellenleiterkabel in die Kabelmuffe 10 einzuführen.

Im Sinne der hier vorliegenden Erfindung wird vorgeschlagen, die Kabeleinführungen fabrikseitig mit Röhrchen 13, nämlich mit sogenannten Mikroducts bzw. Miniducts, vorzukonfektionieren bzw. zu bestücken. Durch die Röhrchen 13 können Mikrokabeln bzw. Minikabeln von außen in die Kabelmuffe 10 eingeführt werden. Dadurch, dass die Kabeleinführungen fabrikseitig mit den Röhrchen 13 vorkonfektioniert sind, entfallen im Feld Installationsarbeiten am Dichtungskörper 11. Zum Einführen eines Mikrokabels bzw. Minikabels durch die Röhrchen 13 in die Kabelmuffe 10 müssen lediglich Verschlusskappen 14, welche die Röhrchen 13 fabrikseitig verschließen, von denselben entfernt werden.

Die Röhrchen 13 bzw. Mikroducts bzw. Miniducts verfügen über einen an den Außendurchmesser der Mikrokabel bzw. Minikabel angepassten Innendurchmesser, derart, dass über jeden Mikroduct bzw. Miniduct ein einziges Mikrokabel bzw. Minikabel in die Kabelmuffe 10 einführbar ist. Der Dichtungskörper 11 der Kabelmuffe 10 verfügt über mehrere Kabeleinführungen, wobei vorzugsweise jede Kabeleinführung mit mehreren Röhrchen bzw. Mikroducts bzw. Miniducts vorkonfektioniert ist, über die nach Entfernung der jeweiligen Verschlusskappen 14 jeweils ein einziges Mikrokabel bzw. Minikabel in die Kabelmuffe 10 einführbar ist.

Wie Fig. 2 entnommen werden kann, ist der Dichtungskörper 11 derart mit den Röhrchen 13 vorkonfektioniert, dass die Röhrchen 13 den Dichtungskörper 11 durchdringen. Mit einem ersten Ende 15 ragen die Röhrchen 13 in einen Innenraum der Kabelmuffe 10 hinein. Mit gegenüberliegenden zweiten Enden 16 hingegen ragen die Röhrchen 13 aus der Kabelmuffe 10 heraus, wobei an den zweiten Enden 16 die Verschlusskappen 14 angreifen, um die Röhrchen 13 fabrikseitig zu verschließen.

Die in Fig. 1 und 2 dargestellte, erfindungsgemäße Kabelmuffe 10 verfügt demnach über einen Dichtungskörper 11, der im Bereich seiner Kabeleinführungen fabrikseitig mit Röhrchen 13, nämlich mit sogenannten Mikroducts bzw. Miniducts, vorkonfektioniert ist. Die Röhrchen 13 durchdringen den Dichtungskörper und sind fabrikseitig mit Verschlusskappen 14 verschlossen. Nach Entfernen der Verschlusskappen kann über jedes Röhrchen 13 jeweils ein Mikrokabel bzw. Minikabel in die Kabelmuffe 10 eingeführt bzw. eingeschoben werden.

Beim Aufbau von Verbindungsstellen bzw. Abzweigstellen eines Lichtwellenleiterkabelnetzes sind bei Verwendung der erfindungsgemäßen Kabelmuffe 10 am Dichtungskörper 11 derselben keine Installationsarbeiten erforderlich. Dies reduziert den Zeitaufwand beim Aufbau von Verbindungsstellen bzw. Abzweigstellen im Feld.

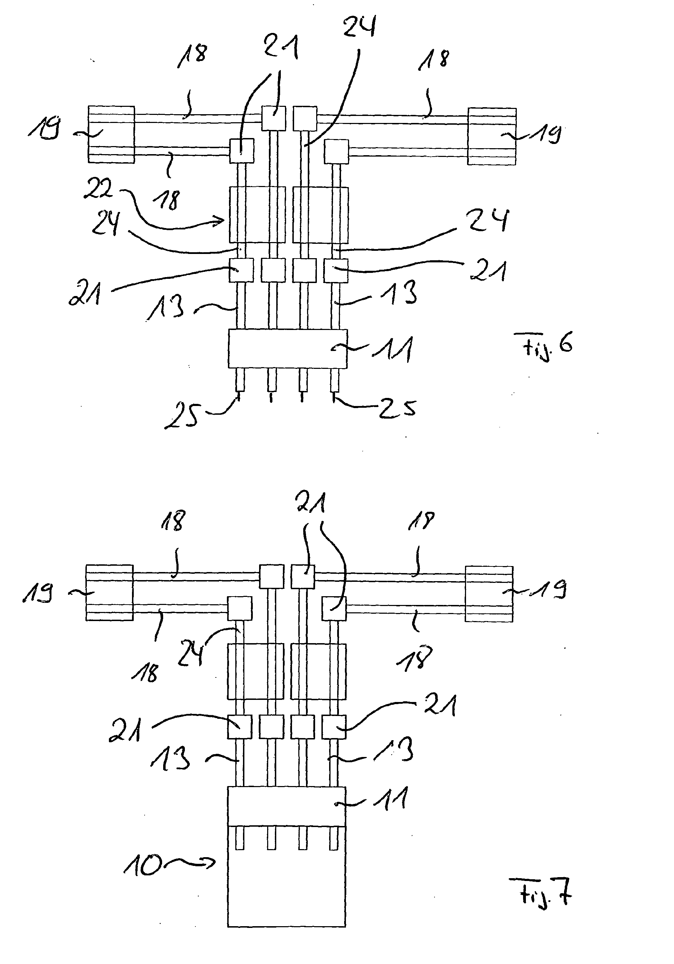

Beim Aufbau einer Verbindungsstelle bzw. Abzweigstelle im Feld unter Verwendung der Kabelmuffe 10 der Fig. 1 und 2 wird, wie nachfolgend unter Bezugnahme auf Fig. 3 bis 7 erläutert wird, wie folgt vorgegangen.

Fig. 3 zeigt einen Ausschnitt aus einer Verlegstrecke eines Lichtwellenleiterkabelnetzes 17, wobei die Verlegstrecke aus Verlegeröhrchen 18, nämlich aus Mikroducts bzw. Miniducts, aufgebaut ist. Gemäß Fig. 3 sind die Verlegeröhrchen 18 jeweils von einer gemeinsamen Hülle 19 umschlossen, wobei die Verlegeröhrchen 18 im Bereich einer Nahtstelle 20 durch Kupplungen 21 miteinander verbunden sind. Durch die Verlegeröhrchen 18 einer derartigen Verlegstrecke eines Lichtwellenleiterkabelnetzes 17 können sogenannte Mikrokabel bzw. Minikabel geführt werden, wobei die Mikrokabel bzw. Minikabel in der Regel erst nach dem Aufbau einer solchen Verlegstrecke in die Verlegeröhrchen 18 durch zum Beispiel Einblasen eingeführt werden. Der Vorteil solcher Verlegstrecken aus Verlegeröhrchen bzw. Mikroducts besteht darin, dass zu jedem Zeitpunkt bedarfsabhängig in verlegte, noch leere Verlegeröhrchen 18 Mikrokabel bzw. Minikabel eingeführt werden können.

Soll nun im Bereich einer derartigen Verlegstrecke eine Verbindungsstelle oder Abzweigstelle aufgebaut werden, so wird die in Fig. 3 dargestellte Verlegstrecke des Lichtwellenleiterkabelnetzes 17 durch Entfernen der Kupplungen 21 aufgetrennt (siehe Fig. 4). Sodann werden Zwischenverlegabschnitte 22, die von einer Hülle 23 umgebene Verlegeröhrchen 24, nämlich Mikroducts bzw. Miniducts, umfassen, an ersten Enden mit den Verlegeröhrchen 18 der Verlegstrecke des Lichtwellenleiterkabelnetzes 17 verbunden. Hierzu kommen gemäß Fig. 5 wiederum Kupplungen 21 zum Einsatz.

Nach dem Verbinden der Verlegeröhrchen 24 der Zwischenverlegabschnitte 22 mit den Verlegeröhrchen 18 der aufgetrennten Verlegstrecke des Lichtwellenleiterkabelnetzes 17 werden sodann in die Verlegeröhrchen 18 und 24 Minikabel 25 bzw. Mikrokabel eingeführt, und zwar soweit, bis dieselben am zweiten Ende der Verlegeröhrchen 24 der Zwischenverlegabschnitte 22 herausragen. Sodann ist es möglich, die Minikabel 25 bzw. Mikrokabel in die Röhrchen 13, mit welchen der Dichtungskörper 11 der Kabelmuffe 10 vorkonfektioniert ist, einzuführen. In der Darstellung der Fig. 5 sind die Minikabel 25 bzw. Mikrokabel komplett durch die Röhrchen 13 des Dichtungskörpers 11 geführt. Nach dem Einführen der Minikabel 25 bzw. Mikrokabel durch die Röhrchen 13 der Kabelmuffe 10 werden die Röhrchen 13 über Kupplungen 21 mit den Verlegeröhrchen 24 der Zwischenverlegabschnitte 22 verbunden (siehe Fig. 6). Die auf diese Weise durch die Röhrchen 13 in die Kabelmuffe 10 eingeführten Minikabel 25 bzw. Mikrokabel können dann zur Realisierung von Verzweigungsstellen bzw. Abzweigstellen innerhalb der Kabelmuffe 10 (siehe Fig. 7) zum Beispiel durch Spleißen und Ablegen in entsprechenden Spleißkassetten gehandhabt werden.

Es liegt demnach im Sinne der hier vorliegenden Erfindung, zum Aufbau von Verbindungsstellen bzw. Abzweigstellen eines Lichtwellenleiterkabelnetzes eine Kabelmuffe zu verwenden deren Dichtungskörper im Bereich von Kabeleinführungen mit Röhrchen vorkonfektioniert ist, in welche Minikabel bzw. Mikrokabel eingeführt werden können.

Obwohl die Erfindung unter Bezugnahme auf Fig. 1 bis 7 am Beispiel einer Kabelmuffe beschrieben wurde, ist die Erfindung nicht auf Kabelmuffen beschränkt. Vielmehr können auch andere Vorrichtungen zur strukturierten Ablage bzw. Handhabung von in Minikabeln bzw. Mikrokabeln geführten Lichtwellenleitern mit Röhrchen vorkonfektioniert werden, um die Minikabel bzw. Mikrokabel über die Röhrchen in die Vorrichtung einzuführen.

### Bezugszeichenliste

- 10: Kabelmuffe
- 11: Dichtungskörper
- 12: Haubenkörper
- 13: Röhrchen/Mikroduct
- 14: Verschlusskappe
- 15: Ende
- 16: Ende
- 17: Lichtwellenleiterkabelnetz
- 18: Verlegeröhrchen/Mikroduct
- 19: Hülle
- 20: Nahtstelle
- 21: Kupplung
- 22: Zwischenverlegabschnitt
- 23: Hülle
- 24: Verlegeröhrchen/Mikroduct
- 25: Mikrokabel/Minikabel

## Patentansprüche

1. Vorrichtung, insbesondere Kabelmuffe, zur strukturierten Ablage bzw. Handhabung von in Mikrokabeln bzw. Minikabeln geführten Lichtwellenleitern, mit einem einen Kabeleinführungsbereich aufweisenden Gehäuse, wobei der Kabeleinführungsbereich mehrere Kabeleinführungen aufweist, **dadurch gekennzeichnet, dass** die Kabeleinführungen fabrikseitig mit Röhrchen (13), insbesondere mit Mikroducts bzw. Miniducts, zur Einführung von Mikrokabeln vorbestückt bzw. vorkonfektioniert sind, derart, dass bei Installationsarbeiten im Feld Mikrokabel über die Röhrchen in die Vorrichtung einführbar sind.

2. Vorrichtung nach Anspruch 1, **dadurch gekennzeichnet, dass** das Gehäuse und der Kabeleinführungsbereich einen Innenraum zur Ablage bzw. Handhabung der in den in Mikrokabeln geführten Lichtwellenleiter umschließen, wobei die Kabeleinführungen des Kabeleinführungsbereichs fabrikseitig derart mit den Röhrchen (13) vorbestückt bzw. vorkonfektioniert sind, dass die Röhrchen (13) den Kabeleinführungsbereich durchdringen und demnach mit einem ersten Ende (15) in den Innenraum hineinragen und mit einem zweiten Ende (16) aus dem Innenraum bzw. der Vorrichtung herausragen.

3. Vorrichtung nach Anspruch 1 oder 2, **dadurch gekennzeichnet, dass** die Röhrchen an Enden (16), mit welchen dieselben aus der Vorrichtung herausragen, fabrikseitig mit Verschlusskappen (14) verschlossen sind.

4. Vorrichtung nach Anspruch 3, **dadurch gekennzeichnet, dass** bei Installationsarbeiten im Feld die Verschlusskappen (14) entfernbar sind, und dass anschließend in Verlegeröhrchen (18, 24) geführte Mikrokabel über die Röhrchen (13) des Kabeleinführungsbereichs in die Vorrichtung einführbar sind.

5. Vorrichtung nach Anspruch 4, **dadurch gekennzeichnet, dass** anschließend Verlegeröhrchen (24) mit den Röhrchen (13) des Kabeleinführungsbereichs über Kupplungen (21) verbindbar sind.

6. Kabelmuffe zur strukturierten Ablage bzw. Handhabung von in Mikrokabeln bzw. Minikabeln geführten Lichtwellenleitern, mit einem einen Dichtungskörper (11) aufweisenden Gehäuse, wobei der Dichtungskörper (11) mehrere Kabeleinführungen aufweist, **dadurch gekennzeichnet, dass** die Kabeleinführungen fabrikseitig mit mehreren Mikroducts bzw. Miniducts (13) zur Einführung von Mikrokabeln vorbestückt bzw. vorkonfektioniert sind, derart, dass bei Installationsarbeiten im Feld über jeden Mikroduct (13) jeweils ein Mikrokabel in die Kabelmuffe einführbar ist.

7. Kabelmuffe nach Anspruch 6, **dadurch gekennzeichnet, dass** das Gehäuse und der Dichtungskörper (11) einen Innenraum zur Ablage bzw. Handhabung der in den Mikrokabeln geführten Lichtwellenleiter umschließen, wobei die Kabeleinführungen des Dichtungskörpers (11) fabrikseitig derart mit den Mikroducts (13) vorbestückt bzw. vorkonfektioniert sind, dass die Mikroducts (13) den Dichtungskörper (11) durchdringen und demnach mit einem ersten Ende (15) in den Innenraum hineinragen und mit einem zweiten Ende (16) aus dem Innenraum bzw. der Kabelmuffe herausragen.

8. Kabelmuffe nach Anspruch 6 oder 7, **dadurch gekennzeichnet, dass** die Mikroducts (13) an Enden (16), mit welchen dieselben aus der Kabelmuffe herausragen, fabrikseitig mit Verschlusskappen (14) verschlossen sind, wobei bei Installationsarbeiten im Feld die Verschlusskappen entfernbar sind, um in Verlegeröhrchen (18, 24) geführte Mikrokabel (25) über die Mikroducts (13) in die Kabelmuffe einzuführen, und wobei anschließend Verlegeröhrchen (24) mit den Mikroducts (13) über Kupplungen (21) verbindbar sind.

9. Verfahren zum Aufbau einer Verbindungsstelle und/oder einer Abzweigstelle eines Lichtwellenleiterkabelnetzes im Bereich von in Verlegeröhrchen geführten Mikrokabeln bzw. Minikabeln unter Verwendung einer Vorrichtung nach einem oder mehreren der Ansprüche 1 bis 5 bzw. 6 bis 8, mit folgenden Schritten:
a) Freilegen eines Abschnitts einer aus Verlegeröhrchen aufgebauten Verlegstrecke für Mikrokabel bzw. Minikabel,
b) Auftrennen der Verlegstrecke,
c) Bereitstellen von Verlegeröhrchen umfassenden Zwischenverlegabschnitten, wobei die Verlegeröhrchen der Zwischenverlegabschnitte an einem ersten Ende mit den Verlegeröhrchen der Verlegstrecke verbunden werden,
d) Einführen von Mikrokabeln bzw. Minikabeln in die Verlegeröhrchen, bis dieselben an dem zweiten Ende aus den Verlegeröhrchen der Zwischenverlegabschnitte herausschauen,
e) Einführungen der Mikrokabel bzw. Minikabel durch die Röhrchen der fabrikseitig mit Röhrchen vorbestückten Vorrichtung, wobei die Röhrchen den Kabeleinführungsbereich der Vorrichtung durchdringen und mit einem Ende aus der Vorrichtung herausragen,
f) Verbinden der Röhrchen der Vorrichtung an ihrem aus derselben herausragenden Ende mit den Verlegeröhrchen der Zwischenverlegabschnitte;
g) Ablegen bzw. Handhaben, insbesondere Spleißen, der in den Mikrokabeln bzw. Minikabeln geführten Lichtwellenleiter innerhalb der Vorrichtung.
